# EUROPEAN PATENT SPECIFICATION

(11) **EP 2 831 123 B1**
(45) Date of publication and mention of the grant of the patent: **19.09.2018**
(21) Application number: 13768365.2
(22) Date of filing: 26.03.2013
(51) Int. Cl.: C08B 37/14, B01J 8/02, D21C 3/02, C01D 1/04, C01F 11/18

(54) **A METHOD AND A SYSTEM FOR ISOLATING XYLAN FROM PLANT MATERIAL, AS WELL AS XYLAN, CALCIUM CARBONATE, AND CELLULOSE FIBRE**
VERFAHREN UND SYSTEM ZUR ISOLIERUNG VON XYLAN AUS PFLANZENMATERIAL SOWIE XYLAN, CALCIUMCARBONAT UND CELLULOSEFASER
PROCÉDÉ ET SYSTÈME POUR ISOLER DU XYLANE À PARTIR DE MATIÈRE VÉGÉTALE, AINSI QUE LE XYLANE, LE CARBONATE DE CALCIUM, ET LES FIBRES DE CELLULOSE

(30) Priority: 27.03.2012 FI 20125345
(43) Date of publication of application: 04.02.2015
(73) Proprietor: UPM-Kymmene Corporation, 00100 Helsinki (FI); Stora Enso Oyj, 00160 Helsinki (FI)
(72) Inventor: KROGERUS, Björn, FI-00200 Helsinki (FI); FUHRMANN, Agneta, FI-02570 Siuntio KK (FI); LAINE, Christiane, FI-02130 Espoo (FI)
(74) Representative: Berggren Oy, Tampere
(86) International application number: PCT/FI2013/050338
(87) International publication number: WO 2013/144446

(56) References cited:
- WO-A1-2011/038936
- WO-A1-2011/042607
- WO-A1-2011/073522
- WO-A1-2012/022836
- WO-A2-2012/136887
- US-A1- 2001 030 029
- US-B1- 6 464 827

## Description

### Field of the invention

The invention relates to a method and a system for isolating xylan from plant material, and xylan. The invention also relates to calcium carbonate and cellulose fibre. The invention further relates to the use of xylan prepared by a method according to the invention as an auxiliary agent or additive, preferably in the manufacture of cellulose based fibre, in papermaking, in a food product, or in a cosmetics product, as well as the use of xylan as a thickening agent, an emulsifier or a coating agent.

### Background of the invention

Hemicelluloses are heteropolysaccharides which are present in plants and are typically water soluble and amorphous. Together with lignin they control the water content in the cell walls of plants. The content and composition of hemicelluloses vary between different plants. For example in trees, the content of hemicellulose is typically about 20 to 35 weight percent of the dry weight of the wood, and the main types of wood hemicelluloses are gluco-mannan and xylan. In industry, hemicelluloses can be used as such or they can be refined to e.g. sugars. The use of hemicelluloses is limited by the fact that is typically difficult to isolate them from plant material with a good yield.

### Brief summary of the invention

The present invention discloses a new method and system for isolating xylan from plant material, preferably hardwood, as well as xylan, cellulose fibre and calcium carbonate isolated by the method. Further, the use of xylan isolated by a method according to the invention as an additive, preferably in the manufacture of cellulose based fibre, in papermaking, in a food product, or in a cosmetics product, as well as the use of xylan isolated by the method according to the invention as a thickening agent, an emulsifier or a coating agent are disclosed.

The present invention makes it possible to isolate xylan from plant material that contains xylan, in a cost efficient way. In the approach according to the invention, inexpensive substances such as sodium hydroxide (NaOH), carbon dioxide (CO₂) and calcium hydroxide (Ca(OH)₂) are typically used for isolating xylan from plant material.

The method according to the invention for isolating xylan will be presented in claim 1. The xylan according to the invention will be presented in claim 9. The cellulose fibre according to the invention will be presented in claim 10. The calcium carbonate according to the invention will be presented in claim 11. The system according to the invention for isolating xylan will be presented in claim 12. The use of xylan according to the invention will be presented in claims 13 to 17.

The method according to the invention comprises one or more of the steps listed hereinbelow: In other words, the invention comprises one, two, three, four, five, six, seven, eight, nine, ten, eleven, or all the twelve steps described below:
- Alkali extraction of cellulose fibres. In alkali extraction, xylan is extracted from cellulose fibres to an extraction solution, i.e. so-called solvent, by means of sodium hydroxide. Thus, xylan is transferred to the extraction solution used for extraction. Consequently, the resulting extract solution comprises both extraction solution and xylan dissolved in it.
- The step of isolating cellulose fibres, in which cellulose fibres are isolated from the extract solution that contains xylan and sodium hydroxide.
- The step of washing cellulose fibres.
- The step of precipitating xylan. In this step, xylan in the extract solution is precipitated by means of carbon dioxide. As a result of the precipitation, precipitated xylan and so-called brightener are obtained.
- The step of isolating precipitated xylan, in which xylan is isolated from said mixture that comprises brightener and precipitated xylan.
- Purifying precipitated xylan, which may comprise one or more washing steps.
- Increasing the dry content of precipitated xylan.
- The step of precipitating calcium carbonate. In this step, calcium hydroxide is added to said brightener, for precipitating calcium carbonate. As a result of the reaction, sodium hydroxide is also formed.
- The step of isolating precipitated calcium carbonate. In this step, calcium carbonate is isolated from sodium hydroxide.
- Purifying precipitated calcium carbonate, which may comprise one or more washing steps.
- Purifying sodium hydroxide, i.e. increasing the degree of purity and/or the concentration of sodium hydroxide.
- Recirculating sodium hydroxide, in which step sodium hydroxide is recirculated to e.g. the step of extracting xylan.

The system according to the invention comprises:
- Extracting equipment for extracting xylan by means of sodium hydroxide in such a way that an extract solution comprising xylan and sodium hydroxide is formed, and/or
- First isolating means for isolating cellulose fibres from the extract solution, and/or
- First washing means for washing cellulose fibres, and/or
- First adding means for adding carbon dioxide to the extract solution, for precipitating xylan and for converting the extract solution into a brightener, and/or
- Second isolating means for isolating precipitated xylan from the brightener, and/or
- Second washing means for increasing the degree of purity of precipitated xylan, and/or
- First drying means for increasing the dry content of precipitated xylan, and/or
- Second adding means for adding calcium hydroxide and for precipitating calcium carbonate as well as for forming sodium hydroxide, and/or
- Third isolating means for isolating precipitated calcium carbonate from the mixture, and/or
- Third washing means for increasing the degree of purity of calcium carbonate, and/or
- Second drying means for increasing the dry content of precipitated calcium carbonate, and/or
- Means for increasing the degree of purity and/or the concentration of sodium hydroxide, for example means for implementing nanofiltration and/or evaporation, and/or
- Recirculating means for recirculating sodium hydroxide. Preferably, sodium hydroxide is recirculated back to the step of extracting xylan.

In the method according to the invention, xylan is isolated from plant material that contains xylan, advantageously from hardwood. Preferably, xylan is isolated from birch and/or eucalyptus. The plant material, from which xylan is isolated, is preferably chemically treated for reducing the content of lignin. In other words, the material is preferably chemically defibrated cellulose fibre or so-called pulp.

Thanks to the sodium hydroxide used in the extraction, a sufficient content of xylan can be dissolved into the extraction solution and clearly better compared with, for example, dissolving xylan by means of calcium hydroxide. By the method according to the invention, it is possible to achieve an industrially applicable, cost effective process for isolating xylan from plant material that contains xylan, preferably from hardwood. Precipitated calcium carbonate and cellulose fibres are also obtained as products in the same process. Advantages of the invention include, among other things, typically cheap auxiliary chemicals, such as CO₂, Ca(OH)₂ and alum which may be used as an auxiliary in the flocculation of xylan, as well as the recyclability of NaOH used in the extraction of the pulp, for re-use.

Xylan prepared by the method according to the invention can be used, for example, as an auxiliary agent in the process of manufacturing paper or paperboard. Xylan can also be used, for example, in a food product, in a cosmetics product, as a thickening agent, as an emulsifier, or as a coating agent.

### Description of the drawings

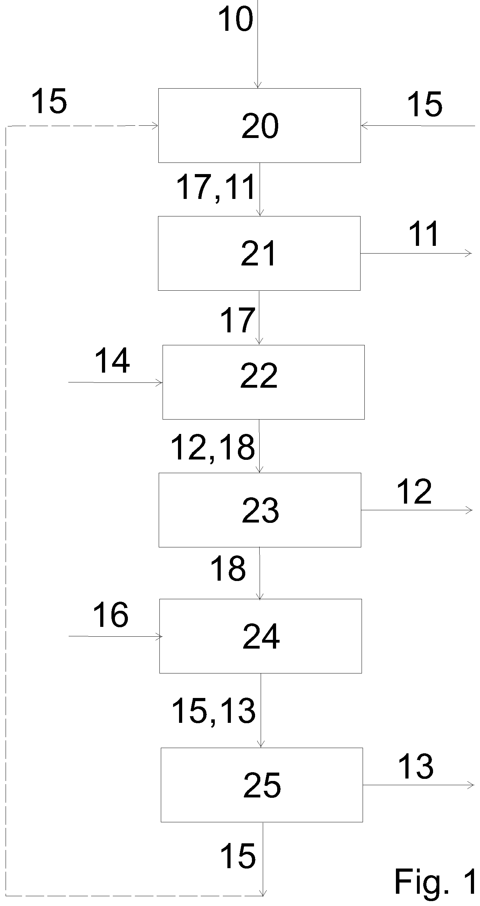

In the following, the invention will be described in more detail with reference to the appended drawing, in which
- Fig. 1: shows a system according to an embodiment for isolating xylan, in a reduced schematic view.

### Detailed description of the invention

In this application, reference is made to Fig. 1, in which the following reference numerals are used:
- 10: cellulose fibres which contain xylan,
- 11: cellulose fibres having a reduced xylan content,
- 12: precipitated xylan,
- 13: precipitated calcium carbonate CaCO₃,
- 14: carbon dioxide CO₂,
- 15: sodium hydroxide NaOH,
- 16: calcium hydroxide,
- 17: extract solution,
- 18: brightener which contains sodium carbonate Na₂CO₃,
- 20: alkali extraction,
- 21: isolation of cellulose fibres,
- 22: precipitation of xylan,
- 23: isolation of xylan,
- 24: precipitation of calcium carbonate, and
- 25: isolation of calcium carbonate.

In the present application, the term "extraction solution" refers to the solution used for extraction, the so-called solvent, into which one or more compounds are transferred from the source material during the extraction. The extraction solution used is sodium hydroxide 15.

In the present application, the term "extract solution" 17 refers to the solution that contains said extraction solution and xylan.

In the present application, the term "brightener" 18 refers to the solution that contains sodium carbonate.

In the present application, the term "xylan-containing cellulose fibre" 10 refers to untreated plant fibres that contain xylan. Most advantageously, the cellulose fibres are softwood fibres, preferably birch fibres and/or eucalyptus fibres. The proportion of hardwood fibres is advantageously at least 80%, more advantageously at least 90% of all the cellulose fibres. Xylan is naturally present, among other things, in the inner parts of hardwood fibres. The content of birch fibres and/or eucalyptus fibres (in dry content) is advantageously at least 50wt%, more advantageously at least 70wt% and most advantageously at least 90 wt% of all the cellulose fibres. Advantageously, cellulose fibres from hardwood, preferably birch and/or eucalyptus, are used.

Bleached birch pulp is an excellent source of xylan. In birch, xylan is particularly pure, because 98% of the hemicelluloses in birch consist of xylan. Furthermore, birch has an exceptionally high content of xylan, and therefore the yield of xylan obtained from birch is high, up to about 10% of the dry content of the wood. Thanks to this, for example hardwood pulp consisting of unrefined or slightly refined chemically defibrated wood fibres can be used in the approach according to the invention.

The cellulose fibres according to the invention may comprise unrefined, slightly refined, and/or wet beaten cellulose fibres. According to an advantageous example, the Schopper-Riegler (SR) value of the cellulose pulp used as the fibre raw material is in the range of 10 to 40, for example 15 to 30.

In the alkali extraction step 20, cellulose fibres are extracted with sodium hydroxide 15 for dissolving xylan from said fibres in the extraction solution, wherein xylan from the cellulose fibres is dissolved in the extraction solution. Thus, xylan is typically dissolved from the inner parts of the fibres as well. Cellulose fibres made by the method according to the invention have a reduced xylan content. According to an advantageous example, the extraction of xylan is continued until 2 to 100%, more advantageously 5 to 50%, and preferably 7 to 25% of the xylan in the fibres has been extracted from the fibres into the extraction solution.

According to an advantageous example, the extraction 20 is performed at a fibre consistency of about 10%, for example 3 to 25%. In an example, the extraction 20 is performed at a fibre consistency of 3 to 5%. In another example, the extraction 20 is performed at a fibre consistency of 5 to 15%.

In the approach according to the invention, xylan is extracted from cellulose fibres by using sodium hydroxide 15. Advantageously, the extraction 20 is performed with 0.25 to 1.25 M sodium hydroxide (NaOH), more advantageously with 0.5 to 1.0 M sodium hydroxide. In an advantageous example, the extraction time at room temperature (for example, at the temperature of 18 to 27°C) is about one hour, for example 45 to 90 minutes. The pH of the mixture formed after the extraction may be, for example, about 12 to 13.

After this, the extract solution 17 that contains xylan is isolated from the cellulose fibres: This isolation 21 of the cellulose fibres can be carried out, for example, by using a filter, such as a so-called wire cloth: The isolated cellulose fibres 11 having a reduced xylan content are recovered, after which they can be washed. Cellulose fibres made by the method according to the invention and having a low xylan content can be used, for example, in a papermaking process.

Xylan is precipitated 22 by adding a gas that contains carbon dioxide 14, preferably gaseous carbon dioxide 14, to the extract solution that contains xylan after the extraction. From the extract solution, xylan is typically precipitated as a white polymer. Furthermore, as a result of the reaction, sodium carbonate is formed as follows:

2NaOH + CO₂ (g) → Na₂CO₃ (aq) + H₂O.

The degree of purity of the carbon dioxide 14 used for precipitating 22 xylan is preferably between 10 and 100%. The precipitation 22 of xylan with carbon dioxide 14 is performed in such a way that the precipitation step is started in a strongly alkaline extraction solution. As the precipitation proceeds, the pH of the extraction solution decreases, thanks to the addition of carbon dioxide 14. Preferably, the pH of the mixture is maintained alkaline (pH>7) during the whole precipitation of xylan. Advantageously, carbon dioxide 14 is added until the pH of the mixture is between 7.5 and 10.5, preferably between 9 and 10. In an example, the precipitation 22 of xylan is intensified by adding a component for intensifying the precipitation to the mixture. In an example, so-called alum or cationic polyacrylamide (PAM) is added as a flocculating agent to the solution.

After this, the remaining solution, i.e. the so-called brightener 18, and xylan 12 are separated from each other as well as possible in the xylan isolating step 23. The step 23 of isolating precipitated xylan 12 can be carried out, for example, by allowing the brightener 18 that contains precipitated xylan 12 to settle for several hours, for example 1 to 8 hours. Thus, precipitated xylan 12 settles onto the bottom of the settling space, such as a container, from which said settled xylan 12 is recovered. Alternatively, the step 23 of separating precipitated xylan 12 can be carried out, for example, by centrifugation. In addition or alternatively, the step 23 of separating precipitated xylan 12 can be carried out, for example, by applying a filtering technique.

The isolated precipitated xylan 12 can be treated further, for example, by washing with a liquid, advantageously with water and/or acetone and/or ethanol. The precipitated xylan can also be subjected to a so-called dialysis treatment for removing salts.

Finally, the dry content of xylan 12 is preferably increased again until the dry content reaches a predetermined level. Preferably, the drying is carried out by so-called spray and/or freeze drying.

To the remaining brightener 18, calcium hydroxide 16 is added for precipitating 24 calcium carbonate. Preferably, the mixture is stirred after the addition of calcium hydroxide 16. After this, the mixture can be allowed to settle. Finally, the precipitated calcium carbonate precipitate 13 is isolated.

The content of calcium hydroxide to be added can be, for example, about 0.5 mol per mol of NaOH. In an example, the content of calcium hydroxide to be added is 0.2 to 1.0 mol per mol of NaOH. The addition of calcium hydroxide 16 to the brightener 18 not only precipitates calcium carbonate but also converts sodium carbonate, formed in connection with the precipitation of xylan, into sodium hydroxide. The reaction, in which the calcium hydroxide 16 reacts with the formed sodium carbonate in such a way that precipitated calcium carbonate (PCC) 13 and sodium hydroxide 15 are obtained as the final products, is the following:

Na₂CO₃ + Ca(OH)₂ → 2 NaOH + CaCO₃

As a result of the reaction, the pH typically rises to a value of about 13.

The reaction conditions, by which it is possible to affect the particle size and quality (temperature, pH, time, concentration, among other things) of PCC 13 are preferably determined in such a way that the desired, predetermined particle size and shape of PCC 13 are obtained.

After the precipitation 24 of calcium carbonate, the dry content of the precipitated calcium carbonate is increased; that is, sodium hydroxide 15 is removed from the mixture, for isolation 25 of calcium carbonate. This can be carried out, for example, by a filtering technique or by centrifugation. Preferably, the removed sodium hydroxide is recovered and recycled in part or in whole.

The sodium hydroxide 15 recovered from the process can be re-used, for example, for the extraction of xylan, or it can be conveyed to another process, or it can be recovered for another further use. Said filtrate recovered from the process can be treated, to increase the degree of purity of the sodium hydroxide.

Thanks to the invention, it is possible to separate xylan from plant fibres, preferably hardwood fibres. At the same time, in the process according to the invention, precipitated calcium carbonate and cellulose fibres may be produced for industrial needs. The sodium hydroxide 15 needed in the process according to the invention can be recirculated at least partly in the process. The method according to the invention is particularly suitable for isolating xylan from bleached birch pulp and/or eucalyptus pulp. In an example, the extraction of xylan is performed in connection with the bleaching of the fibre, preferably in connection with the last bleaching step.

The invention is not limited solely to the examples presented in Fig. 1 and in the above description, but the invention is characterized in what will be presented in the following claims.

## Claims

1. A method for isolating xylan from plant material, in which method cellulose fibres that contain xylan are used, advantageously cellulose fibres from hardwood, and which method comprises, in the following order:
- extracting (20) xylan from said cellulose fibres by means of sodium hydroxide, for forming an extract solution (17) that contains xylan,
- removing cellulose fibres from said mixture comprising cellulose fibres and extract solution (17), for isolating said extract solution (17) from said mixture,
- adding carbon dioxide (14) to said extract solution (17) for precipitating xylan, whereby liquid brightener (18) and precipitated xylan (12) are formed,
- separating said brightener (18) from the mixture, for isolating xylan from said mixture,
- adding calcium hydroxide (16) to said brightener (18), for forming precipitated calcium carbonate and liquid sodium hydroxide (15), and
- removing sodium hydroxide from said mixture that contains sodium hydroxide and precipitated calcium carbonate, for isolating calcium carbonate from said mixture.

2. The method according to claim 1, **characterized in that** at least 90% of said plant fibres are bleached, chemically pulped cellulose fibres from hardwood.

3. The method according to claim 1 or 2, **characterized in that** at least 50% of said plant fibres are cellulose fibres from birch and/or eucalyptus.

4. The method according to any of the preceding claims, **characterized in that** sodium hydroxide is recirculated for re-use in the process, preferably for extracting xylan.

5. The method according to any of the preceding claims, **characterized in that** the method comprises adding carbon dioxide for precipitating xylan, until the pH of the mixture is between 7.5 and 10.

6. The method according to any of the preceding claims, **characterized in that** the method is integrated in chemical pulping comprising one or more bleaching steps, wherein said extraction (20) is performed in connection with or after the last bleaching step of said cellulose fibres.

7. The method according to any of the preceding claims, **characterized in** extracting 5 to 50% of the xylan contained in said cellulose fibres.

8. The method according to any of the preceding claims, **characterized in that** said cellulose fibres have been refined, and that the refining degree of the cellulose fibres at the beginning of the extraction is between 10 and 40 in the Schopper Riegler (SR) number scale.

9. A system for isolating xylan from plant material that contains xylan, the system comprising
- extracting equipment for extracting xylan by means of sodium hydroxide in such a way that an extract solution (17) comprising xylan and sodium hydroxide is formed,
- first isolating means for isolating cellulose fibres from the extract solution,
- first adding means for adding carbon dioxide to the extract solution for precipitating xylan and for forming brightener (18) from the extract solution,
- second isolating means for isolating precipitated xylan (12) from the brightener (18),
- second adding means for adding calcium hydroxide (16), wherein precipitated calcium carbonate (13) and sodium hydroxide (15) are formed, and
- third isolating means for isolating precipitated calcium carbonate (13) from the mixture.

## Patentansprüche

1. Verfahren zum Isolieren von Xylan aus Pflanzenmaterial, wobei bei diesem Verfahren Cellulosefasern, die Xylan enthalten, vorteilhafterweise Cellulosefasern aus Hartholz verwendet werden und das Verfahren in der folgenden Reihenfolge umfasst:
- Extrahieren (20) von Xylan aus den Zellulosefasern mittels Natriumhydroxid zur Bildung einer Extraktlösung (17), die Xylan enthält,
- Entfernen von Cellulosefasern aus der Mischung, die Cellulosefasern und Extraktlösung (17) umfasst, zum Isolieren der Extraktlösung (17) aus der Mischung,
- Zugeben von Kohlendioxid (14) zu der Extraktlösung (17) zum Ausfällen von Xylan, wobei flüssiger Aufheller (18) und ausgefälltes Xylan (12) gebildet werden,
- Abtrennen des Aufhellers (18) aus der Mischung zum Isolieren von Xylan aus der Mischung,
- Zugeben von Calciumhydroxid (16) zu dem Aufheller (18) zur Bildung von ausgefälltem Calciumcarbonat und flüssigem Natriumhydroxid (15), und
- Entfernen von Natriumhydroxid aus der Mischung, die Natriumhydroxid und ausgefälltes Calciumcarbonat enthält, zum Isolieren von Calciumcarbonat aus der Mischung.

2. Verfahren nach Anspruch 1, **dadurch gekennzeichnet, dass** mindestens 90% der Pflanzenfasern aus gebleichten, chemisch aufgeschlossenen Cellulosefasern aus Hartholz bestehen.

3. Verfahren nach Anspruch 1 oder 2, **dadurch gekennzeichnet, dass** mindestens 50% der Pflanzenfasern Cellulosefasern aus Birke und/oder Eukalyptus sind.

4. Verfahren nach einem der vorstehenden Ansprüche, **dadurch gekennzeichnet, dass** Natriumhydroxid zur Wiederverwendung in dem Verfahren, vorzugsweise zum Extrahieren von Xylan, zurückgeführt wird.

5. Verfahren nach einem der vorstehenden Ansprüche, **dadurch gekennzeichnet, dass** das Verfahren das Zugeben von Kohlendioxid zum Ausfällen von Xylan umfasst, bis der pH-Wert der Mischung zwischen 7,5 und 10 liegt.

6. Verfahren nach einem der vorstehenden Ansprüche, **dadurch gekennzeichnet, dass** das Verfahren in den chemischen Celluloseaufschluss integriert ist, der einen oder mehrere Bleichschritte umfasst, wobei das Extrahieren (20) in Verbindung mit oder nach dem letzten Bleichschritt der Cellulosefasern durchgeführt wird.

7. Verfahren nach einem der vorstehenden Ansprüche, **dadurch gekennzeichnet, dass** 5 bis 50% des in den Zellulosefasern enthaltenen Xylans extrahiert werden.

8. Verfahren nach einem der vorstehenden Ansprüche, **dadurch gekennzeichnet, dass** die Cellulosefasern raffiniert wurden und der Raffinierungsgrad der Cellulosefasern zu Beginn des Extrahierens zwischen 10 und 40 auf der Schopper-Riegler-(SR-)Zahlenskala liegt.

9. System zum Isolieren von Xylan aus Pflanzenmaterial, das Xylan enthält, wobei das System umfasst:
- Extraktionsvorrichtung zum Extrahieren von Xylan mittels Natriumhydroxid auf eine Weise, dass eine Extraktlösung (17) aus Xylan und Natriumhydroxid gebildet wird,
- erste Isoliermittel zum Isolieren von Cellulosefasern aus der Extraktlösung,
- erste Zugabemittel zum Zugeben von Kohlendioxid zu der Extraktlösung zum Ausfällen von Xylan und zur Bildung eines Aufhellers (18) aus der Extraktlösung,
- zweite Isoliermittel zum Isolieren des ausgefällten Xylans (12) aus dem Aufheller (18),
- zweite Zugabemittel zum Zugeben von Calciumhydroxid (16), wobei ausgefälltes Calciumcarbonat (13) und Natriumhydroxid (15) gebildet werden, und
- dritte Isoliermittel zum Isolieren des ausgefällten Calciumcarbonats (13) aus der Mischung.

## Revendications

1. Procédé d'isolement de xylane à partir de matériel végétal, procédé dans lequel des fibres de cellulose qui contiennent du xylane sont utilisées, avantageusement des fibres de cellulose issues de bois dur, et procédé qui comprend, dans l'ordre suivant :
- l'extraction (20) de xylane à partir desdites fibres de cellulose au moyen d'hydroxyde de sodium, pour former une solution d'extrait (17) qui contient du xylane,
- l'élimination des fibres de cellulose dudit mélange comprenant des fibres de cellulose et une solution d'extrait (17), pour isoler ladite solution d'extrait (17) dudit mélange,
- l'ajout de dioxyde de carbone (14) à ladite solution d'extrait (17) pour précipiter le xylane, par lequel un azurant liquide (18) et du xylane précipité (12) sont formés,
- la séparation dudit azurant (18) du mélange, pour isoler le xylane dudit mélange,
- l'ajout d'hydroxyde de calcium (16) audit azurant (18), pour former du carbonate de calcium précipité et de l'hydroxyde de sodium liquide (15), et
- l'élimination de l'hydroxyde de sodium dudit mélange qui contient de l'hydroxyde de sodium et du carbonate de calcium précipité, pour isoler le carbonate de calcium dudit mélange.

2. Procédé selon la revendication 1, **caractérisé en ce qu'**au moins 90% desdites fibres végétales sont des fibres de cellulose blanchies, transformées chimiquement en pâte issues de bois dur.

3. Procédé selon la revendication 1 ou 2, **caractérisé en ce qu'**au moins 50 % desdites fibres végétales sont des fibres de cellulose de bouleau et/ou d'eucalyptus.

4. Procédé selon l'une quelconque des revendications précédentes, **caractérisé en ce que** l'hydroxyde de sodium est remis en circulation pour être réutilisé dans le procédé, de préférence pour l'extraction du xylane.

5. Procédé selon l'une quelconque des revendications précédentes, **caractérisé en ce que** le procédé comprend l'ajout de dioxyde de carbone pour la précipitation du xylane, jusqu'à ce que le pH du mélange soit compris entre 7,5 et 10.

6. Procédé selon l'une quelconque des revendications précédentes, **caractérisé en ce que** le procédé est intégré dans une transformation chimique en pâte comprenant une ou plusieurs étapes de blanchiment, dans lequel ladite extraction (20) est réalisée en relation avec ou après la dernière étape de blanchiment desdites fibres de cellulose.

7. Procédé selon l'une quelconque des revendications précédentes, **caractérisé par** l'extraction de 5 à 50 % du xylane contenu dans lesdites fibres de cellulose.

8. Procédé selon l'une quelconque des revendications précédentes, **caractérisé en ce que** lesdites fibres de cellulose ont été raffinées, et **en ce que** le degré de raffinage des fibres de cellulose au début de l'extraction est compris entre 10 et 40 dans l'échelle d'indice Schopper Riegler (SR).

9. Système d'isolement de xylane à partir de matériel végétal contenant du xylane, le système comprenant
- un équipement d'extraction pour extraire du xylane au moyen d'hydroxyde de sodium de manière à former une solution d'extrait (17) comprenant du xylane et de l'hydroxyde de sodium,
- un premier moyen d'isolement pour isoler les fibres de cellulose à partir de la solution d'extrait,
- un premier moyen d'ajout pour ajouter du dioxyde de carbone à la solution d'extrait afin de précipiter le xylane et de former l'azurant (18) à partir de la solution d'extrait,
- un second moyen d'isolement pour isoler le xylane précipité (12) de l'azurant (18),
- un deuxième moyen d'ajout pour ajouter de l'hydroxyde de calcium (16), dans lequel du carbonate de calcium précipité (13) et de l'hydroxyde de sodium (15) sont formés, et
- un troisième moyen d'isolement pour isoler le carbonate de calcium précipité (13) du mélange.
